# EUROPEAN PATENT SPECIFICATION

(11) **EP 3 159 528 B1**
(45) Date of publication and mention of the grant of the patent: **19.06.2019**
(21) Application number: 16195183.5
(22) Date of filing: 21.10.2016
(51) Int. Cl.: F02M 35/12, F16L 55/02, F16L 55/033, B21D 26/033

(54) **RESONATOR ASSEMBLY AND MANUFACTURING PROCESS FOR PRODUCING THE SAME**
RESONATORANORDNUNG UND HERSTELLUNGSVERFAHREN ZUR HERSTELLUNG DAVON
ENSEMBLE DE RÉSONATEUR ET SON PROCÉDÉ DE FABRICATION

(30) Priority: 23.10.2015 US 201514921148
(43) Date of publication of application: 26.04.2017
(73) Proprietor: Dura Operating, LLC, Auburn Hills, MI 48326 (US)
(72) Inventor: Bauer, Michael Frank, Pinconning, Michigan 48650 (US); Rezmer, Joe, East Almeda, Michigan 48650 (US)
(74) Representative: Bungartz Christophersen Partnerschaft mbB Patentanwälte

(56) References cited:
- EP-A1- 2 341 499
- EP-A2- 1 469 186
- DE-A1- 19 855 708
- US-A1- 2011 073 406
- US-A1- 2014 345 733

## Description

### FIELD OF THE INVENTION

The invention relates to resonator assemblies for use with an internal combustion engine including a turbocharger.

### BACKGROUND OF THE INVENTION

Resonator assemblies may be utilized with internal combustion engines that have turbochargers. Often the operating noises produced by the engine are specified to comply with noise requirements for a desired sound profile. Resonator assemblies may be utilized to dampen or insulate the desired noise emission over various frequency ranges such as between 2,000 and 7,000 hertz. Such resonator assemblies are described in DE 198 55 708 A1 and EP 1 469 186 A2. EP 2 341 499 shows a further embodiment of a resonator assembly.

Prior art resonator assemblies often require complicated manufacturing processes and require joining and welding with numerous subcomponents within an assembly. There is therefore a need in the art for an improved resonator that eliminates numerous connections and is easy to assemble. There is also a need in the art for an improved resonator that is cost effective and dampens desired frequency ranges specified by a car manufacturer. Further, there is a need in the art for an improved resonator that includes bends or curves that are monolithically formed with the resonator to a desired shape eliminating complicated assembly processes with a turbocharger and engine of a vehicle.

### SUMMARY OF THE INVENTION

In one aspect, there is disclosed a resonator assembly that includes an outer tube that extends from an inlet to an outlet. The outer tube includes at least two chambers formed along a length of the tube. The chambers are spaced from each other and separated by a gap. The outer tube includes an inner and outer diameter. An inner tube extends from an inlet to an outlet. The inner tube includes a plurality of perforations formed about the circumference of the inner tube. The inner tube is positioned within the outer tube. The inner diameter of the outer tube includes tapered walls formed thereon. The tapered walls are positioned in the gaps and frictionally seal the inner and outer tubes together.

In another aspect, there is disclosed a resonator assembly that includes an outer tube that extends from an inlet to an outlet. The outer tube has at least two chambers formed along a length of the outer tube. An inner tube extends from an inlet to an outlet. The inner tube includes a plurality of perforations formed about the circumference of the inner tube. The inner tube is positioned within the outer tube. The inner and outer tubes frictionally engage upon assembly sealing the at least two chambers relative to each other.

In yet another aspect there is disclosed a method of forming a resonator assembly that includes the steps of: providing an outer tube having an inlet and outlet, hydroforming a plurality of chambers in the outer tube and hydroforming tapered walls in the outer tube, forming a bend in the outer tube at the inlet of the outer tube, providing an inner tube, forming perforations in the inner tube, forming a bend in the inner tube at the outlet of the inner tube, and inserting the inner tube within the outer tube wherein the inner and outer tubes frictionally engage sealing the at least two chambers relative to each other.

### BRIEF DESCRIPTION OF THE DRAWINGS

Figure 1 is a perspective view of an inner tube including perforations formed therein;
Figure 2 is a perspective view of an outer tube including chambers and a bend formed thereon;
Figure 3 is a partial assembly view of the inner and outer tubes when assembled;
Figure 3A is a partial enlarged detailed view of Figure 3;
Figure 3B is a partial enlarged detailed view of Figure 3;
Figure 3C is a partial enlarged detailed view of Figure 3;
Figure 3D is a partial enlarged detailed view of Figure 3;
Figure 4 is a partial cutaway view detailing the frictional interface of the inner tube and outer tube showing the tapered walls;
Figure 5 is a plot of the attenuation versus frequency of the resonator including adjustment of attenuation at specified frequency bands;

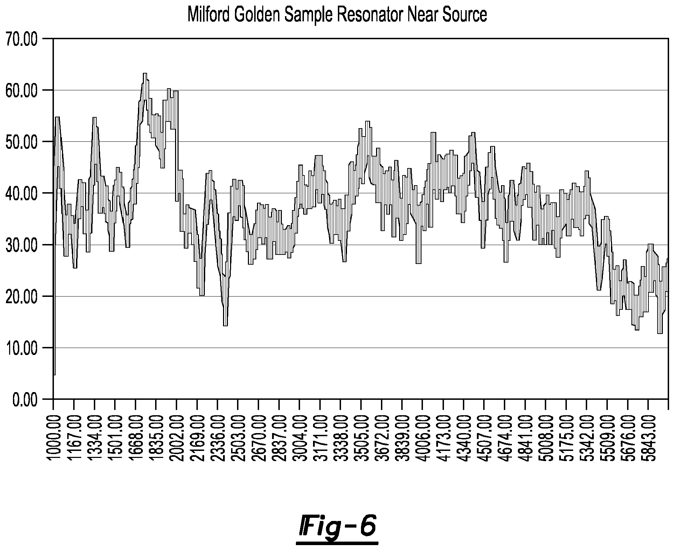

Figure 6 is a plot of the attenuation as a function of frequency for one embodiment of a resonator;
Figure 7 is a partial perspective view of the outer tube including the hydroformed chambers positioned within a die; and
Figure 8 is a partial perspective view detailing the outer tube positioned within the die and a bend being formed thereon.

### DETAILED DESCRIPTION OF THE PREFERRED EMBODIMENTS

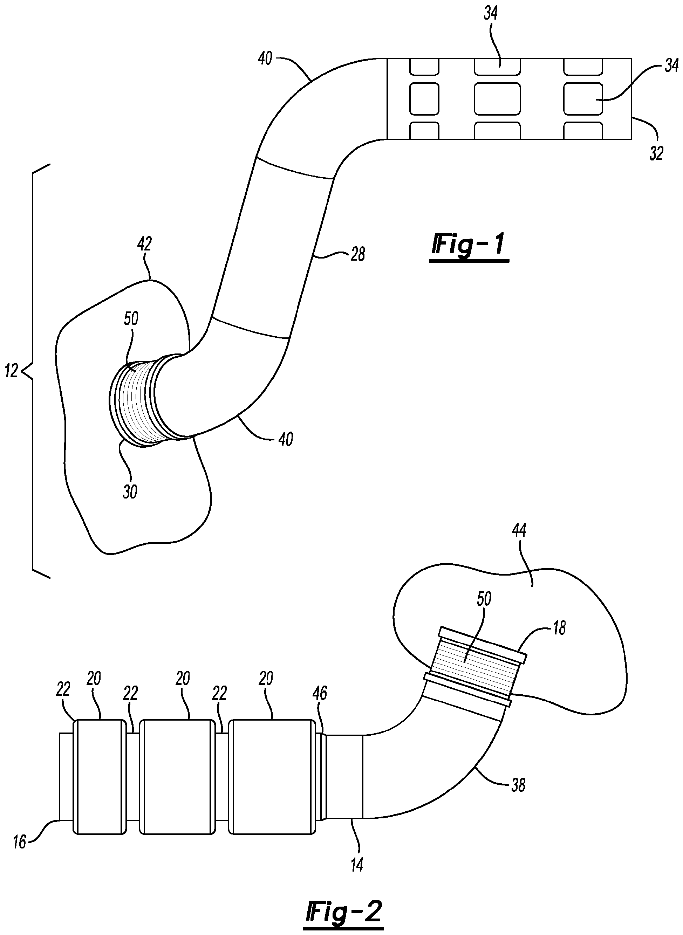

Referring to Figures 1-3, there is shown a resonator assembly 12 including an outer tube 14 that extends from an inlet 16 to an outlet 18. The outer tube 14 includes at least two chambers 20 formed along a length of the outer tube 14. The chambers 20 are spaced from each other and separated by a gap 22. The outer tube 14 includes an inner diameter 24 and an outer diameter 26.

An inner tube 28 extends from an inlet 30 to an outlet 32. The inner tube 28 includes a plurality of perforations 34 formed about the circumference of the inner tube 28. The inner tube 28 is positioned within the outer tube 14 when assembled. In one aspect, the inner diameter 24 of the outer tube 14 includes tapered walls 36 formed thereon. The tapered walls 36 are positioned within the gaps 22 when assembled and frictionally seal the inner and outer tubes 28, 14 relative to each other.

Referring to Figure 1, the outer tube 14 includes a bend 38 monolithically formed thereon proximate the inlet 16 of the outer tube 14. Additionally, the inner tube 28 includes a bend 40 monolithically formed thereon proximate the outlet 32 of the inner tube 28. When assembled, the inner tube 28 extends from a turbocharger 42 to the outer tube 14 which is coupled with a cooler 44. In one aspect, hot air from the turbocharger is routed to the cooler and back through a cold side to a throttle body.

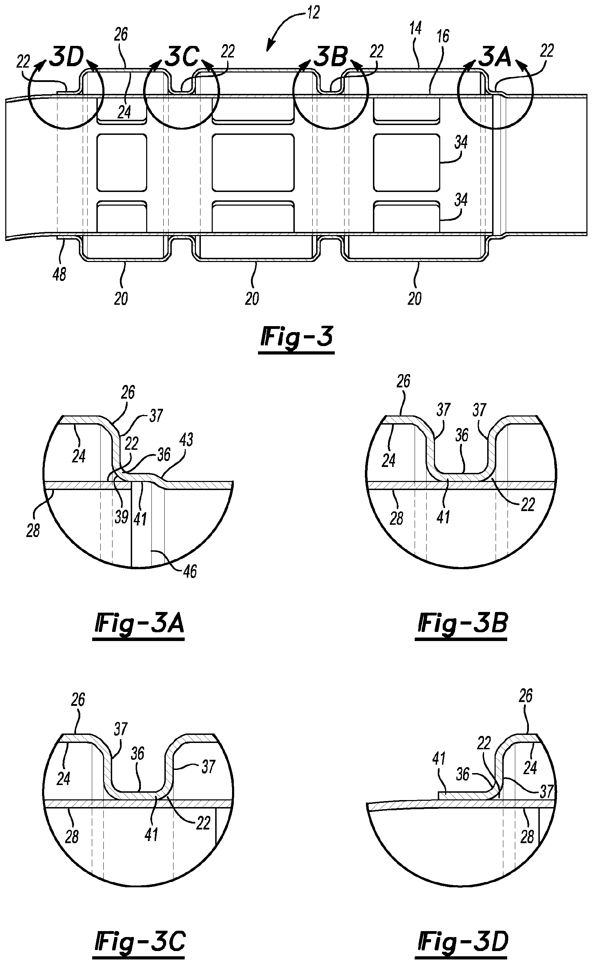

In one aspect, the perforations 34 formed within the inner tube 28 are positioned within the chambers 20 of the outer tube 14 when assembled. The outer tube 14 may include a stop 46 formed thereon that defines a position of the inner tube 28 when inserted within the outer tube 14. Referring to Figure 3A the stop may include a reduced diameter section that engages the outlet of the inner tube 28. In this manner, the perforations 34 will be positioned a predetermined distance within the chambers 20. In one aspect, the perforations 34 may be rectangular shaped slots that are punched into the circumference of the inner tube 28. It should be realized that various shapes may be utilized other than the rectangular slots depicted in the figures.

Referring to Figure 2, the outer tube 14 includes at least two chambers 20 formed along a length of the outer tube 14. In the depicted embodiments, the outer tube 14 includes three chambers 20 formed along a length of the outer tube 14. Various numbers of chambers 20 may be utilized to attenuate at specified frequencies. In one aspect, the outer tube 14 may be hydroformed to define the chambers 20 within the outer tube 14.

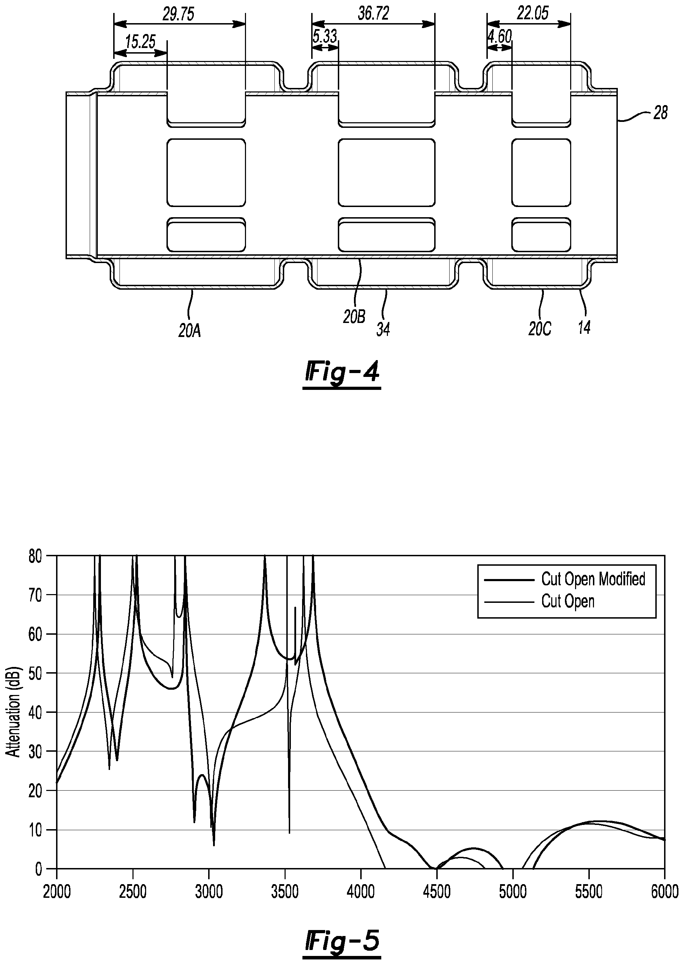

In one aspect, a position of the perforations 34 formed along the length of the inner tube 28 may be adjusted such that a specified distance is provided positioning the slots at a desired location within the chambers to attenuate at a desired frequency. Referring to Figure 5, there is shown two plots with the perforations 34 positioned in alternate positions within the chambers 20.

In the first plot, the perforations 34 are positioned to measure a distance as specified in Figure 4. Datum lines are provided in the figure identifying the edges 21 of the chambers 20. The perforations 34 within the first chamber 20A begins at 15.25mm as measured from a left most edge 21 of the chamber 20A and extends to 29.75mm as measured from the left most edge 21 of the chamber 20A, whereas the perforations 34 in the second chamber 20B begins at 5.3mm as measured from a left most edge 21 of the chamber 20B and extends to 36.72mm as measured from the left most edge 21 of the chamber 20B, whereas the perforations 34 in the third chamber 20C begins at 4.6mm as measured from a left most edge 21 of the chamber 20C and extends to 22.5mm as measured from the leftmost edge 21 of the chamber 20C. In the depicted embodiment of figure 4 the measurements are from left to right as shown in the figure.

In the second plot, the perforations 34 are measured as described above with respect to the first plot. The perforations in the first chamber 20A are positioned from 14.9mm to 30.06mm and the perforations 34 in the second chamber 20B are positioned at 4.2mm to 45.3mm, whereas the perforations 34 in the third chamber 20C are positioned at 4.95mm to 21.7mm.

As can be seen in the plots of Figure 5, the position of the perforations 34 within the chambers 20 may be adjusted to provide a desired attenuation at various frequencies. Specifically as shown in the plot of Figure 5, the movement of the perforations in the second plot results in a higher attenuation at 3500Hz.

Referring to Figure 3, there is shown an assembly view of the resonator assembly 12 including the inner tube 28 positioned within the outer tube 14 such that the inner and outer tubes 28, 14 frictionally engage upon assembly sealing the chambers 20 relative to each other. As seen in figure 3, the outer tube 14 includes tapered walls 36 formed thereon. The tapered walls 36 are positioned in the gaps 22 and frictionally seal the inner and outer tubes 28, 14. In this manner, when assembling the resonator assembly 12 complicated welds positioned between the inner and outer tubes 28, 14are negated and frictional engagement of the inner and outer tubes 28, 14 provides a sealing between adjacent chambers 20. In one aspect, the resonator assembly 12 includes a single weld 48 joining the inner and outer tubes 28, 14 at the outlets of the inner and outer tubes 28, 14. In this manner, the assembly of the resonator assembly 12 for installation is efficient requiring only a single weld.

The tapered wall 36 of Figure 3A includes a downward extending portion 37 that transitions at a radius 39 to a contact portion 41 that frictionally engages the inner tube 28. The tapered wall 36 further extends to an angled portion 43 that accommodates the stop 46.

The tapered wall 36 of Figures 3B and 3C includes a pair of downward extending portions 37 that transitions at a radius 39 to a contact portion 41 that frictionally engages the inner tube 28.

The tapered wall 36 of Figure 3D includes a downward extending portion 37 that transitions at a radius 39 to a contact portion 41 that frictionally engages the inner tube 28. The inner tube 28 further continues to a bend 40 and connects with the turbocharger 42.

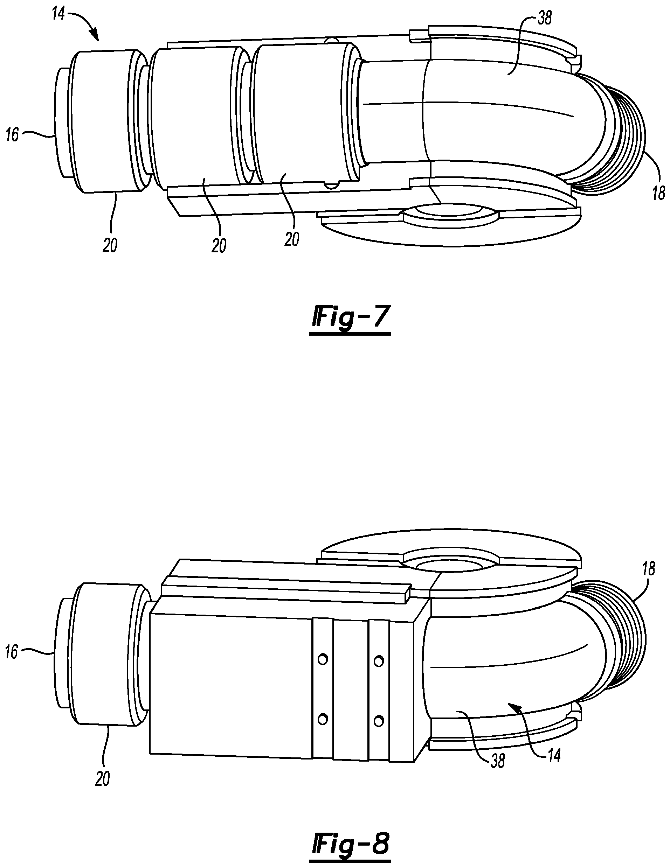

Referring to Figures 7-8, there is depicted pictorial views of a method of forming a resonator assembly 12. The method includes providing an outer tube 14 having an inlet 16 and outlet 18. Hydroforming at least two chambers 20 in the outer tube 14 and hydroforming the tapered walls 36 in the outer tube 14. Following formation of the chambers 20 a bend 38 is formed in the outer tube 14, as shown in Figure 2. An inner tube 28 is provided and perforations 34 are formed in the inner tube along the circumference of the inner tube 28. A bend 40 is formed in the inner tube 28. The inner tube 28 is inserted within the outer tube 14 such that the inner and outer tubes 28, 14 frictionally engage each other at the tapered walls 36 sealing the at least two chambers 20 relative to each other, as shown in Figure 3.

In one aspect, when the inner tube 28 and outer tube 14 are frictionally joined, there is the step of a single weld joint 48 being formed joining the inner and outer tubes 28, 14. The single weld joint 48 provides a simple procedure to create the resonator assembly 12 as opposed to prior art resonators that require multiple welds joining various components.

In one aspect, the step of forming perforations 34 in the inner tube 28 includes punching perforations 34 in the inner tube 28 at specified positions about the circumference and along the length of the inner tube 28. In one aspect, the bend 40 of the inner tube may be formed thereon prior to punching the perforations 34.

Further, the step of forming a bend 38 in the outer tube includes positioning the hydroformed outer tube 14 in a die and bending the outer tube 14 to a predefined curve as shown in Figures 7-8. Coupling joints50 may be formed on the inner and outer tubes 28, 14 to allow assembly with the turbocharger 42 and cooling sections 44.

## Claims

1. A resonator assembly (12) comprising:
an outer tube (14) extending from an inlet (16) to an outlet (18), the outer tube (14) having at least two chambers (20) formed along a length of the outer tube (14);
an inner tube (28) extending from an inlet (30) to an outlet (32), the inner tube (28) including a plurality of perforations (34) formed about the circumference of the inner tube (28),
wherein the inner and outer tubes frictionally engage upon assembly sealing the at least two chambers (20) relative to each other and the at least two chambers (20) are hydroformed and wherein the outlet (32) of the inner tube (28) being positioned within the outer tube (14) and the inlet (30) of the inner tube (28) being positioned outside the outer tube (14).

2. The resonator assembly (12) of claim 1, the chambers (20) being spaced from each other and separated by a gap (22), the outer tube (14) including an inner diameter (24) and an outer diameter (26);
and
wherein the inner diameter (24) of the outer tube (14) includes tapered walls (36) formed thereon, the tapered walls (36) positioned in the gaps (22) and frictionally sealing the inner and outer tubes.

3. The resonator assembly of claim 1 or claim 2, wherein the outer tube (14) includes a bend (38) monolithically formed thereon proximate the inlet (16) of the outer tube (14).

4. The resonator assembly of any of the preceding claims, wherein the inner tube (28) includes a bend (40) monolithically formed thereon proximate the outlet (32) of the inner tube (28).

5. The resonator assembly of any of the preceding claims, wherein the perforations (34) are positioned within the chambers (20) of the outer tube (14).

6. The resonator assembly of any of the preceding claims, wherein the outer tube (14) includes a stop (46) formed thereon defining a position of the inner tube (28) within the outer tube (14) when assembled.

7. The resonator assembly of any of the preceding claims, wherein the perforations (34) are rectangular shaped slots.

8. The resonator assembly of any of the preceding claims including a single weld (48) joining the inner and outer tubes (28, 14) at the outlets (32, 18) of the inner and outer tubes (28, 14).

9. The resonator assembly of any of the preceding claims, wherein the outer tube (14) includes three chambers (20) formed along a length of the outer tube (14).

10. A method of forming a resonator assembly (12) comprising the steps of:
providing an outer tube (14) having an inlet (16) and outlet (18);
hydroforming a plurality of chambers (20) in the outer tube (14) and hydroforming tapered walls (36) in the outer tube (14);
forming a bend (38) in the outer tube (14) at the inlet (16) of the outer tube (14);
providing an inner tube (28) extending from an inlet (30) to an outlet (32);
forming perforations (34) in the inner tube (28);
forming a bend (40) in the inner tube (28) at the outlet (32) of the inner tube (28);
inserting the outlet (32) of the inner tube (28) within the outer tube (14) such that the inlet (30) of the inner tube (28) is positioned outside the outer tube (14), wherein the inner and outer tubes (28, 14) frictionally engage sealing the at least two chambers (20) relative to each other.

11. The method of forming a resonator assembly of claim 10 including the step of welding a single joint (48) joining the inner and outer tubes (28, 14) at the outlets of the inner and outer tubes (28, 14).

12. The method of forming a resonator assembly of claim 10 or claim 11, wherein the step of forming perforations (34) includes punching perforations in the inner tube (28).

13. The method of forming a resonator assembly of any of the claims 10 to 12, wherein the step of forming a bend (38) in the outer tube (14) at the inlet (16) of the outer tube (14) includes positioning the hydroformed outer tube (14) in a die and bending the outer tube (14) to a predefined curve.

14. The method of forming a resonator assembly of any of the claims 10 to 13, including the step of forming coupling joints (50) on the inner and outer tubes (28, 14).

## Patentansprüche

1. Resonatoranordnung (12), aufweisend:
eine äußere Röhre (14), die sich von einem Einlass (16) zu einem Auslass (18) erstreckt, wobei die äußere Röhre (14) mindestens zwei Kammern (20) hat, die entlang einer Länge der äußeren Röhre (14) ausgebildet sind;
eine innere Röhre (28), die sich von einem Einlass (30) zu einem Auslass (32) erstreckt, wobei die innere Röhre (28) eine Mehrzahl von Durchbrechungen (34) hat, die um den Umfang der inneren Röhre (28) ausgebildet sind;
wobei die inneren und äußeren Röhren beim Abdichten der Anordnung der mindestens zwei Kammern (20) relativ zueinander reibschlüssig ineinander eingreifen und die mindestens zwei Kammern (20) hydrogeformt sind, und wobei der Auslass (32) der inneren Röhre (28) innerhalb der äußeren Röhre (14) positioniert wird und der Einlass (30) der inneren Röhre (28) außerhalb der äußeren Röhre (14) positioniert wird.

2. Resonatoranordnung (12) nach Anspruch 1, wobei die Kammern (20) voneinander beabstandet und durch einen Spalt (22) getrennt sind, wobei die äußere Röhre (14) einen Innendurchmesser (24) und einen Außendurchmesser (26) enthält;
und
wobei der Innendurchmesser (24) der äußeren Röhre (14) darauf ausgebildete konisch zulaufende Wände (36) enthält, wobei die konisch zulaufenden Wände (36) in den Spalten (22) positioniert sind und die inneren und äußeren Röhren reibschlüssig abdichten.

3. Resonatoranordnung nach Anspruch 1 oder Anspruch 2, wobei die äußere Röhre (14) eine Krümmung (38) enthält, die benachbart zum Einlass (16) der äußeren Röhre (14) darauf monolithisch ausgebildet ist.

4. Resonatoranordnung nach einem der vorhergehenden Ansprüche, wobei die innere Röhre (28) eine Krümmung (40) enthält, die benachbart zum Auslass (32) der inneren Röhre (28) darauf monolithisch ausgebildet ist.

5. Resonatoranordnung nach einem der vorhergehenden Ansprüche, wobei die Durchbrechungen (34) in den Kammern (20) der äußeren Röhre (14) positioniert sind.

6. Resonatoranordnung nach einem der vorhergehenden Ansprüche, wobei die äußere Röhre (14) einen Anschlag (46) enthält, der darauf ausgebildet ist und eine Position der inneren Röhre (28) in der äußeren Röhre (14) definiert, wenn sie zusammengebaut sind.

7. Resonatoranordnung nach einem der vorhergehenden Ansprüche, wobei die Durchbrechungen (34) rechtwinklig geformte Aussparungen sind.

8. Resonatoranordnung nach einem der vorhergehenden Ansprüche, wobei sie eine einzelne Schweißnaht (48) enthält, die die inneren und äußeren Röhren (28, 14) an den Auslässen (32, 18) der inneren und äußeren Röhren (28, 14) verbindet.

9. Resonatoranordnung nach einem der vorhergehenden Ansprüche, wobei die äußere Röhre (14) drei Kammern (20) enthält, die entlang einer Länge der äußeren Röhre (14) ausgebildet sind.

10. Verfahren zum Ausbilden einer Resonatoranordnung (12), das die Schritte aufweist zum:
Bereitstellen einer äußeren Röhre (14) mit einem Einlass (16) und einem Auslass (18);
Hydroformen einer Mehrzahl von Kammern (20) in der äußeren Röhre (14) und Hydroformen von konisch zulaufenden Wänden (36) in der äußeren Röhre (14);
Ausbilden einer Krümmung (38) in der äußeren Röhre (14) am Einlass (16) der äußeren Röhre (14);
Bereitstellen einer inneren Röhre (28), die sich von einem Einlass (30) zu einem Auslass (32) erstreckt;
Ausbilden von Durchbrechungen (34) in der inneren Röhre (28);
Ausbilden einer Krümmung (40) in der inneren Röhre (28) am Auslass (32) der inneren Röhre (28);
Einführen des Auslasses (32) der inneren Röhre (28) in die äußere Röhre (14), sodass der Einlass (30) der inneren Röhre (28) außerhalb der äußeren Röhre (14) positioniert ist, wobei die inneren und äußeren Röhren (28, 14) reibschlüssig ineinander eingreifen, wodurch die mindestens zwei Kammern (20) relativ zueinander abgedichtet werden.

11. Verfahren zum Ausbilden einer Resonatoranordnung nach Anspruch 10, das den Schritt zum Schweißen einer einzelnen Verbindungsstelle (48) enthält, die die inneren und äußeren Röhren (28, 14) an den Auslässen der inneren und äußeren Röhren (28, 14) verbindet.

12. Verfahren zum Ausbilden einer Resonatoranordnung nach Anspruch 10 oder Anspruch 11, wobei der Schritt zum Ausbilden von Durchbrechungen (34) ein Ausstanzen von Durchbrechungen in der inneren Röhre (28) enthält.

13. Verfahren zum Ausbilden einer Resonatoranordnung nach einem der Ansprüche 10 bis 12, wobei der Schritt zum Ausbilden einer Krümmung (38) in der äußeren Röhre (14) am Einlass (16) der äußeren Röhre (14) ein Positionieren der hydrogeformten äußeren Röhre (14) in einem Gesenk und ein Biegen der äußeren Röhre (14) in eine vordefinierte Krümmung enthält.

14. Verfahren zum Ausbilden einer Resonatoranordnung nach einem der Ansprüche 10 bis 13, das den Schritt zum Ausbilden von Kupplungsverbindungen (50) auf den inneren und äußeren Röhren (28, 14) enthält.

## Revendications

1. Ensemble résonateur (12) comprenant :
un tube externe (14) s'étendant à partir d'une entrée (16) jusqu à une sortie (18), ledit tube externe (14) possédant au moins deux chambres (20) formées le long d une longueur du tube externe (14) ;
un tube interne (28) s'étendant à partir d'une entrée (30) jusqu à une sortie (32), le tube interne (28) comprenant une pluralité de perforations (34) formées autour de la circonférence du tube interne (28),
lesdits tubes interne et externe se mettant en prise par frottement lors de l'assemblage scellant les au moins deux chambres (20) l'une par rapport à l'autre et les au moins deux chambres (20) sont hydroformées et ladite sortie (32) du tube interne (28) étant positionnée à l'intérieur du tube externe (14) et ladite entrée (30) du tube interne (28) étant positionnée à l'extérieur du tube externe (14).

2. Ensemble résonateur (12) selon la revendication 1, lesdites chambres (20) étant espacées les unes des autres et séparées par un écart (22), ledit tube externe (14) comprenant un diamètre interne (24) et un diamètre externe (26) ;
et
ledit diamètre interne (24) du tube externe (14) comprenant des parois effilées (36) formées sur celui-ci, lesdites parois effilées (36) étant positionnées dans les écarts (22) et scellant par frottement les tubes interne et externe.

3. Ensemble résonateur selon la revendication 1 ou 2, ledit tube externe (14) comprenant un coude (38) formé d une seule pièce sur celui-ci à proximité de l'entrée (16) du tube externe (14).

4. Ensemble résonateur selon l'une quelconque des revendications précédentes, ledit tube interne (28) comprenant un coude (40) formé d une seule pièce sur celui-ci à proximité de la sortie (32) du tube interne (28).

5. Ensemble résonateur selon l'une quelconque des revendications précédentes, lesdites perforations (34) étant positionnées dans les chambres (20) du tube externe (14).

6. Ensemble résonateur selon l'une quelconque des revendications précédentes, ledit tube externe (14) comprenant une butée (46) formée sur celui-ci définissant une position du tube interne (28) à l'intérieur du tube externe (14) lorsqu ils sont assemblés.

7. Ensemble résonateur selon l'une quelconque des revendications précédentes, lesdites perforations (34) étant des fentes de forme rectangulaire.

8. Ensemble résonateur selon l'une quelconque des revendications précédentes, comprenant une seule soudure (48) joignant les tubes interne et externe (28, 14) au niveau des sorties (32, 18) des tubes interne et externe (28, 14).

9. Ensemble résonateur selon l'une quelconque des revendications précédentes, ledit tube externe (14) comprenant trois chambres (20) formées le long d une longueur du tube externe (14).

10. Procédé de formation d'un ensemble résonateur (12) comprenant les étapes de :
fourniture d un tube externe (14) possédant une entrée (16) et une sortie (18) ;
hydroformation d une pluralité de chambres (20) dans le tube externe (14) et hydroformation des parois effilées (36) dans le tube externe (14) ;
formation d un coude (38) dans le tube externe (14) au niveau de l'entrée (16) du tube externe (14) ;
fourniture d un tube interne (28) s'étendant à partir d'une entrée (30) jusqu à une sortie (32) ;
formation des perforations (34) dans le tube interne (28) ;
formation d un coude (40) dans le tube interne (28) au niveau de la sortie (32) du tube interne (28) ;
insertion de la sortie (32) du tube interne (28) dans le tube externe (14) de sorte que l'entrée (30) du tube interne (28) soit positionnée à l'extérieur du tube externe (14), lesdits tubes interne et externe (28, 14) se mettant en prise par frottement scellant les au moins deux chambres (20) l'une par rapport à l'autre.

11. Procédé de formation d'un ensemble résonateur selon la revendication 10, comprenant l'étape de soudage d un joint unique (48) joignant les tubes interne et externe (28, 14) au niveau des sorties des tubes interne et externe (28, 14).

12. Procédé de formation d'un ensemble résonateur selon la revendication 10 ou 11, ladite étape de formation des perforations (34) comprenant le poinçonnage de perforations dans le tube interne (28).

13. Procédé de formation d'un ensemble résonateur selon l'une quelconque des revendications 10 à 12, ladite étape de formation d un coude (38) dans le tube externe (14) au niveau de l'entrée (16) du tube externe (14) comprenant le positionnement du tube externe (14) hydroformé dans une matrice et le cintrage du tube externe (14) selon une courbe prédéfinie.

14. Procédé de formation d'un ensemble résonateur selon l'une quelconque des revendications 10 à 13, comprenant l'étape de formation des joints de couplage (50) sur les tubes interne et externe (28, 14).
